(19) Europäisches Patentamt
European Patent Office
Office européen des brevets

(11) **EP 4 641 708 A1**

(12) **EUROPEAN PATENT APPLICATION**
published in accordance with Art. 153(4) EPC

(43) Date of publication:
29.10.2025 Bulletin 2025/44

(21) Application number: 22856989.3

(22) Date of filing: 21.12.2022

(51) International Patent Classification (IPC):
*H01M 4/66* (2006.01)    *C22F 1/08* (2006.01)
*H01M 10/0525* (2010.01)    *H01M 4/02* (2006.01)

(52) Cooperative Patent Classification (CPC):
**H01M 4/661; C22F 1/08; H01M 4/667;**
**H01M 10/0525;** H01M 2004/021

(86) International application number:
**PCT/IB2022/062616**

(87) International publication number:
**WO 2024/134258 (27.06.2024 Gazette 2024/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Volta Energy Solutions S.à r.l.**
**2242 Luxembourg (LU)**

(72) Inventors:
• **Moon, Honggi**
**9559 WILTZ (LU)**
• **Kim, Sangbeom**
**9559 WILTZ (LU)**

(74) Representative: **Office Freylinger**
**P.O. Box 48**
**8001 Strassen (LU)**

(54) **METAL FOIL HAVING EXCELLENT ELONGATION AT EDGE BREAK AND SECONDARY BATTERY COMPRISING SAME**

(57)    The present invention provides a metal foil (100) having significantly improved resistance to edge breakage by selectively increasing an elongation of edge portions (60) at both ends of the metal foil, and to an electrode for a secondary battery and a secondary battery including the metal foil.

FIG. 1

EP 4 641 708 A1

**Description**

TECHNICAL FIELD

The present invention relates to a metal foil having significantly improved resistance to edge breakage by selectively increasing an elongation at opposite ends of the metal foil, and to an electrode for a secondary battery and a secondary battery including the metal foil.

BACKGROUND ART

In general, an electrolytic copper foil is widely used as a basic material of a printed circuit board (PCB) used in the electric/electronic industry. In addition, by improving the physical properties of the electrolytic copper foil, it is widely used as an anode current collector of a secondary battery. Accordingly, the demand for such an electrolytic copper foil is rapidly increasing mainly in small products such as slim notebook computers, personal digital assistants (PDA), e-books, MP3 players, next-generation mobile phones, and ultra-thin flat panel displays.

Such an electrolytic copper foil is prepared in a manner in which sulfuric acid-aqueous solution of copper sulfate is used as an electrolyte, an electrodeposited copper is precipitated on a drum surface by applying a direct current between an anode (e.g., a positive electrode) and a rotating cathode drum (e.g., a negative electrode) immersed in the electrolyte, and the precipitated copper electrodeposits is stripped from the drum surface of the rotating cathode and continuously wound.

Such an electrolytic copper foil is used as a current collector for printed circuit boards or secondary batteries. In particular, a thin current collector is required to increase the capacity of a lithium secondary battery, and in the case of such a thin copper foil, it is easily broken and difficult to handle, resulting in a decrease in manufacturing yield and productivity. Accordingly, there is a demand for a copper foil that does not break during the battery manufacturing process or during battery operation.

DISCLOSURE OF INVENTION

TECHNICAL PROBLEM

The present inventors have recognized that in the case of a metal foil having a thin thickness of about 20 $\mu$m or less, breakage mainly starts from an edge portion.

Accordingly, the present invention is directed to a metal foil improved in terms of edge breakage resistance by selectively increasing an elongation of predetermined opposite end areas based on a surface parallel to a longitudinal direction of the metal foil.

The present invention is further directed to an electrode for a secondary battery using the above-described metal foil and a secondary battery including the electrode.

Other objectives and advantages of the present invention may be more clearly explained by the following detailed description and claims.

SOLUTION TO PROBLEM

In order to achieve the above technical objectives, a metal foil includes one surface and another surface, wherein an edge portion at opposite ends of a surface parallel to a longitudinal direction of the metal foil has a first elongation E1, a remaining area of the metal foil except the edge portion has a second elongation E2, and the first elongation is 110% or more compared to the second elongation.

According to an embodiment of the present invention, an elongation change rate (RE) according to Equation 2 below may be 10% or more.

$$[Equation\ 2]$$

$$RE = (E1-E2/E2) \times 100$$

According to an embodiment of the present invention, a difference between the first elongation and the second elongation may be in a range from 1 to 20%.

According to an embodiment of the present invention, the first elongation may be in a range from 3 to 30%, and the second elongation may be in a range from 2 to 20%.

According to an embodiment of the present invention, a breaking strength of the edge portion at opposite ends may be in a range from 35 to 55 kpsi, and a breaking strength of the remaining area of the metal foil except the edge portion may be in a range from 50 to 85 kpsi.

According to an embodiment of the present invention, the edge portion may range from one end in the longitudinal direction of the metal foil to 15 mm.

According to an embodiment of the present invention, the metal foil may be a wound metal foil roll.

According to an embodiment of the present invention, the edge portion at opposite ends of the metal foil may be locally heat treated while the metal foil is transferred from a first roller to a second roller.

According to an embodiment of the present invention, the heat treatment may be carried out at a temperature of 150°C or higher for 0.1 to 60 seconds under inert conditions.

According to an embodiment of the present invention, the metal foil may be one or more metals selected from Cu, Al, Ni, Fe, Ag and Au or alloys thereof.

According to an embodiment of the present invention, a thickness of the metal foil may be in a range from 3 to 20 $\mu$m.

According to an embodiment of the present invention, a roughness (Rz) of each of opposite surfaces of the metal foil may be in a range from 0.5 to 5.0 $\mu$m, and a surface roughness difference between the one surface and the another surface may be in a range from 2.0 $\mu$m or less.

According to an embodiment of the present invention, the metal foil may further include at least one layer of an anti-corrosion layer formed on a surface of the metal foil, and the anti-corrosion layer may include at least one of chromium (Cr), molybdenum (Mo), nickel (Ni), a silane compound and a nitrogen compound.

According to an embodiment of the present invention, the metal foil may be an electrolytic metal foil.

According to an embodiment of the present invention, the metal foil may be applied as an anode current collector of a lithium secondary battery.

In addition, the present invention provides an electrode for a secondary battery including the metal foil; and a secondary battery including the electrode.

EFFECTS OF THE INVENTION

According to an embodiment of the present invention, it is possible to provide a metal foil having excellent resistance to breakage by selectively increasing an elongation of edge portions at opposite ends among the entire area of the metal foil.

Accordingly, when the metal foil according to the present invention is used as a current collector for a battery, quality reliability may be continuously maintained during the manufacturing process, processing, and use of a secondary battery, and cracks and tearing of the metal foil are prevented during charging and discharging of the battery, thereby providing excellent overall functions.

Effects according to the present invention are not limited by the description exemplified above, and more various effects are incorporated in the present specification.

BRIEF DESCRIPTION OF THE DRAWING PORTIONS

FIG. 1 is a cross-sectional view illustrating a structure of a metal foil according to an example of the present invention.
FIG. 2 is a cross-sectional view illustrating a structure of a metal foil according to another example of the present invention.
FIG. 3 is a view schematically illustrating a manufacturing process of a metal foil according to an example of the present invention.
FIG. 4 is a view schematically illustrating a manufacturing process of a metal foil according to an example of the present invention.
100, 200: metal foil
10a: one surface (drum surface)
10b: another surface (electrolyte surface)
20: anti-corrosion layer
50: metal layer
60: edge portion
400: local heat treatment apparatus

DETAILED DESCRIPTION OF THE INVENTION

Hereinafter, the present invention will be described in detail.

All terms (including technical and scientific terms) used in this specification may be used in the meaning commonly understood by those of ordinary skill in the art to which the present invention pertains, unless otherwise defined. In addition, terms defined in a commonly used dictionary are not to be interpreted ideally or excessively, unless clearly defined in particular.

In addition, throughout this specification, when a part "includes" or "comprises" a certain element, it is to be understood as an open-ended term that includes the possibility of further including other elements rather than excluding other elements, unless otherwise stated. In addition, throughout the specification, "on" or "above" means not only when it is located on or beneath a target part, but also includes the case where there is another part therebetween, and does not mean that it is located upwardly with respect to the direction of gravity. In the present specification, terms such as "first" and "second" do not indicate any order or importance but are used to distinguish components from each other.

As used herein, "preferred" and "preferably" refer to embodiments of the present invention that may provide certain advantages under certain circumstances. However, other embodiments may also be preferred, under the same or other circumstances. Additionally, the recitation of one or more preferred embodiments does not imply that other embodiments are not useful, nor is it intended to exclude other embodiments from the scope of the invention.

<Metal Foil>

An example of the present invention is a metal foil applicable to a current collector of a secondary battery, a copper clad laminate (CCL), and/or a printed circuit board (PCB) and more specifically a battery foil.

The metal foil is characterized in that at least one side edge portion of a surface parallel to a longitudinal direction of the metal foil, specifically, edge portions at opposite ends have a selectively higher elongation than the remaining area. Accordingly, it is differentiated from conventional metal foil having substantially the same elongation over the entire area or having different elongation in a specific direction such as width direction/longitudinal direction.

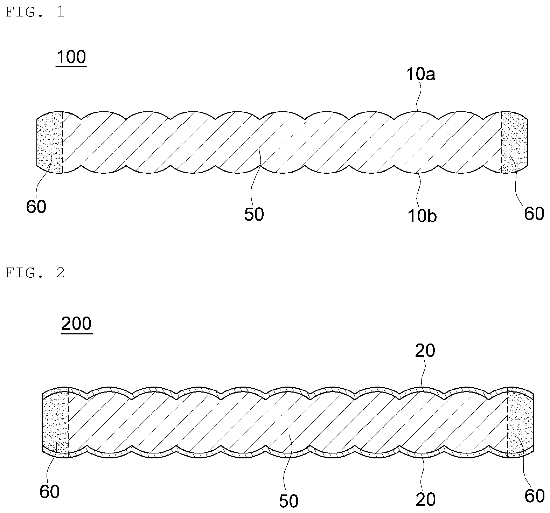

The configuration of the metal foil according to the present invention will be described with reference to FIG. 1. FIG. 1 is a cross-sectional view illustrating a structure of a metal foil according to the present invention.

Referring to FIG. 1, a metal foil 100 according to the present invention includes a metal layer having one surface 10a and another surface 10b, and an elongation (e.g., elongation rate) of edge portions 60 at opposite ends of a surface parallel to a longitudinal direction of the battery foil 100 may be 110% or more compared to an elongation of a remaining area 50 of the metal foil except the edge portions 60. Specifically, it may be in a range from 110 to 600%, and more specifically in a range from 110 to 460%.

Here, the elongation is based on measurement according to the IPC-TM-650 2.4.18 standard. In addition, since the elongation may decrease as a thickness of the metal foil becomes thinner, it may be based on the thickness of the metal foil in a range from 3 to 20 $\mu$m. In the following description, the elongation of the edge portions at opposite ends in the longitudinal direction of the metal foil 100 is symbolized and represented as a first elongation E1, and the elongation of the remaining area of the metal foil except the edge portions may be represented as a second elongation E2.

In general, tearing (e.g., breakage) easily occurs in the case of a thin metal foil, and such breakage (e.g., fracture) mainly starts from an edge of the metal foil. In particular, in the secondary battery manufacturing process, the edge portion of the metal foil is easily broken in a winding process or an active material coating process of a manufacturing process of a secondary battery, resulting in a decrease in productivity and manufacturing yield.

On the other hand, in the metal foil 100 according to the present invention, by selectively performing local heat treatment only on the edge portions 60 at opposite ends in the longitudinal direction under predetermined conditions, the elongation of the edge portion 60 may be increased as compared to the entire area of the metal foil (50, except for the edge portion), thereby having high resistance to breakage of the edge portion. When the metal foil 100 having such a high edge elongation is applied as a current collector of a secondary battery, it is possible to secure high productivity and manufacturing yield during the manufacturing process of the battery due to ease of handling and excellent workability. In particular, since the metal foil according to the present invention has a high elongation and excellent breaking resistance of the edge portion, even with a thin thickness of 20 $\mu$m or less as well as the normal thickness range, a loading amount of the active material applied on the metal foil may increase to exhibit high capacity characteristics of the battery.

In an example, the metal foil 100 may have an elongation change rate (RE) of 10% or more according to Equation 2 below. Specifically, it may be in a range from 10 to 400%, and more specifically in a range from 10 to 360%.

```
[Equation 2]

RE = (E1-E2/E2) × 100
```

In an example, a difference between the first elongation E1 and the second elongation E2 may be in a range from 1 to 20%, and more specifically in a range from 2 to 18%. For example, the first elongation of the edge portions 60 at opposite ends may be in a range from 3 to 30%, and specifically in a range from 5 to 30%. In addition, the second elongation may be in a range from 2 to 20%, and specifically in a range from 3 to 20%.

In another example, a breaking strength of the edge portions 60 at opposite ends in the longitudinal direction of the metal foil 100 may be in a range from 35 to 55 kpsi. In addition, a breaking strength of a remaining area 50 of the metal foil except the edge portions 60 may be in a range from 50 to 85 kpsi.

As used herein, the edge portion 60 may mean a range from one end of the metal foil 100 to 15 mm with respect to a surface parallel to the longitudinal direction of the metal foil 100. Specifically, it may range from one end of the metal foil 100 to 10 mm. The metal foil 100 according to the present invention having such opposite-end edge elongation properties may be represented in physical properties such as average grain size.

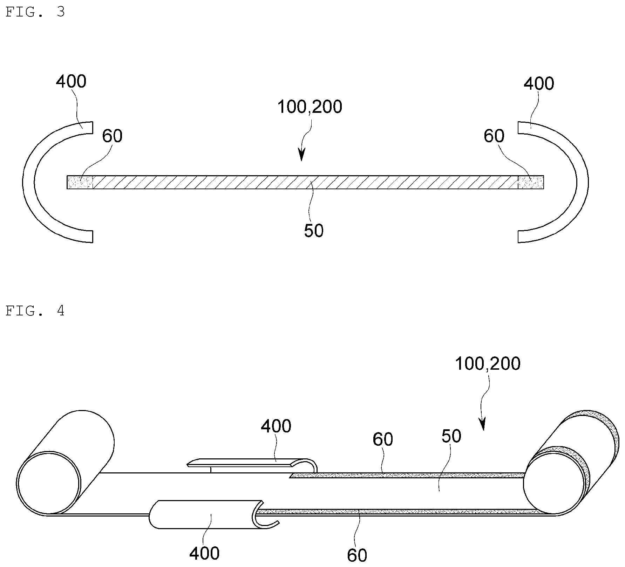

A method for manufacturing the metal foil 100 of the present invention having the above-described elongation characteristics of the edge portion is not particularly limited, and as an example, it may be produced by local heat treatment in a selective manner only on edge portions at opposite ends under predetermined conditions (see FIGS. 3-4 below).

As long as only the edge portions 60 at opposite ends in the longitudinal direction may be selectively heat treated among the entire area of the metal foil 100 according to the present invention, the specific heat treatment method and conditions thereof are not particularly limited. For example, various methods such as conventional high-frequency induction heating, infrared (IR), and hot-air heating known in the art may be applied, and in particular, high-frequency induction heating, which is easy to heat in a selective manner and controllable for each predetermined area, may preferably be used.

In addition, a heat treatment temperature is not particularly limited, and may be, for example, a temperature equal to or higher than a softening point of the metal foil 100, that is, a softening proceeding temperature or higher, and may be, for example, a temperature of 150°C or higher. In an example, edge portions 60 at opposite ends of the metal foil 100 may be locally heat treated at a temperature in a range from 150 to 500°C for 0.1 to 60 seconds under inert conditions. In such a case, the inert conditions are not particularly limited, and nitrogen gas or inert gas known in the art may be freely used.

The metal foil 100 according to the present invention is not particularly limited and may have a conventional shape known in the art. As an example, the metal foil 100 may be in the form of a sheet or a roll of metal foil wound in a roll shape known in the art.

Referring to FIG. 4 below, the metal foil 100 may be subjected to local heat treatment selectively on edge portions at opposite ends in the longitudinal direction of the metal foil, while being transferred from an arbitrary first roller to a second roller after a film forming process. More specifically, in the metal foil 100, edge portions 60 at opposite ends may be locally heat treated by an edge heat treatment apparatus disposed at opposite ends in the longitudinal direction of the metal foil, while the metal foil roll drawn from the arbitrary first roller is being transferred to the second roller, and then, it may be wound again into a roll shape by the second roller. Subsequently, the metal foil 100 may be slit to a desired size or width as needed.

The metal foil of the present invention processed as described above may minimize a breakage (tear) phenomenon of the edge portion that may occur during a subsequent manufacturing process of the metal foil, or a battery electrode manufacturing process using the metal foil, such as winding process or electrode active material coating process, by virtue of its characteristics such as a high elongation of the edge portion 60 and a high break resistance. In addition, since the metal foil exhibits inherent physical properties of the metal foil in the remaining area 50 except for the edge portion 60, it is possible to implement excellent quality reliability due to the metal foil. For example, when the edge portion of the high-strength metal foil is subjected to local heat treatment as described above, high elongation characteristics and high break resistance of the edge portion may be exhibited.

The metal foil 100 according to the present invention may be an metal foil prepared through a foil forming process by an electroplating method. More specifically, one surface of the metal foil 100 has a shiny surface (e.g., an "S surface," a drum surface, etc.) 10a which has a relatively low roughness and thus has a high gloss, and another surface of the metal foil has a matte surface (e.g., an "M surface", an electrolyte surface, etc.) 10b which has a relatively high roughness due to so-called mountain structures and thus has a low gloss.

In such a case, a bonding force with an active material and a yield of the battery may greatly vary depending on a surface state of the metal foil 100 which is used as the current collector. For example, when surface non-uniformity due to the surface roughness of the metal foil is too high, there is a problem in that a discharge-capacity retention rate of the secondary battery is lowered, and on the other hand, when the surface of the metal foil is too uniform, it may be difficult to secure the binding force between the current collector and the active material, and thus the active material may be desorbed from the current collector during operation of the secondary battery, thereby causing problems such as an internal short circuit. In addition, according to a state of the metal foil, a difference in a coating amount of the active material between the opposite surfaces may be caused. The non-uniform coating amount between the opposite surfaces may cause a problem that a capacity of the electrode may decrease and/or unstable behavior of the electrode may occur due to a difference in deformation between the opposite surfaces of the current collector. Accordingly, in an embodiment of the present invention, by adjusting the surface roughness of the opposite surfaces of the metal foil 100 to a predetermined range, it is possible to secure required physical properties of the metal foil 100 as a current collector, that is, an excellent bonding strength with the active materials and a high discharge capacity retention rate.

In an example, the metal foil 100 includes a drum surface (e.g., one surface, 10a) and an electrolyte surface (e.g., another surface, 10b), and a surface roughness of the opposite surfaces 10a and 10b may be approximately in a range from 0.5 to 5.0 $\mu$m, in terms of Rz (ten-point average roughness), and specifically in a range from 1.0 to 4.0 $\mu$m. More specifically, the surface roughness of the drum surface (e.g., S surface, 10a) of the metal foil may be in a range from 1.0 to 2.5 $\mu$m, and the surface roughness of the electrolyte surface (e.g., M surface 10b) may be in a range from 1.0 to 2.5 $\mu$m.

In another example, a difference in surface roughness between the drum surface 10a and the electrolyte surface 10b of the metal foil 100 may be 1.0 $\mu$m or less, and specifically, 0.5 $\mu$m or less.

In addition, a thickness of the metal foil 100 may have a typical thickness range known in the art, for example, in a range from 3 $\mu$m to 20 $\mu$m, but the present invention is not particularly limited thereto. When the thickness of the metal foil 100 is too thin to be less than about 3 $\mu$m, it is difficult to handle the metal foil in a process of manufacturing the battery, lowering the workability, and on the other hand, when the thickness of the metal foil 100 exceeds about 20 $\mu$m, it is difficult to manufacture a high-capacity battery because volume and weight may increase due to a thickness of a current collector when the metal foil 100 is used as a current collector.

The metal foil 100 according to an embodiment of the present invention is not particularly limited in terms of, for example, components, composition, and/or structure constituting the metal foil, as long as the elongation characteristics of the edge portions 60 at opposite ends of a surface parallel to the longitudinal direction of the metal foil is satisfied.

The metal foil 100 may include or be formed of conventional conductive metal known in the art. For example, the metal foil 100 may include one or more metals selected from Cu, Al, Ni, Fe, Ag, and Au or alloys thereof, and may preferably be metals including Cu, Ni, and Al or alloys thereof. In such a case, the metal component included in the alloy is not particularly limited, and a common metal known in the art may be used. Specifically, the metal foil 100 may be a copper foil made of copper or copper alloy. For example, the copper foil may be a conventional copper foil known in the art without limitation, and may be, for example, a standard metal foil, a highly elongated copper foil, a high-strength copper foil, or a copper foil for an electric vehicle battery. However, it is not particularly limited thereto. The metal foil 100 may be in the form of a foil, specifically, may be a flat metal foil.

In an example, the metal foil 100 may be a copper foil formed through electroplating in which a current is applied between an electrode plate and a rotating drum which are spaced apart from each other in an electrolyte. The electrolyte may have a composition including 50 to 150 g/l of copper ions, 50 to 150 g/l of sulfuric acids, 1 to 100 ppm of halogens, 3 to 1500 ppb of brighteners, 3 to 4000 ppb of low molecular weight gelatins, 3 to 3000 ppb of HEC, and 1 to 20 ppb of levelers, but it is not particularly limited thereto, and it may have a conventional electrolyte composition known in the art.

In addition, unless otherwise specified, the above-described physical properties may be based on a thickness in a range from 3 to 20 $\mu$m of the metal foil. However, embodiments of the present invention are not limited to the above-described thickness range, and may be appropriately adjusted within a typical thickness range known in the art.

Referring to FIG. 2, the metal foil 100 according to an example of the present invention may include at least one layer of an anti-corrosion layer 20 formed on the surfaces 10a and 10b thereof.

The anti-corrosion layer 20 is selectively formed on the surfaces 10a and 10b of the metal foil 100 to prevent corrosion (e.g., rust). The anti-corrosion layer 20 may include conventional inorganic corrosion-resistant (e.g., rust-preventive) materials, organic corrosion-resistant materials, or mixtures thereof known in the art, for example, at least one or more of chromium (Cr), molybdenum (Mo), nickel (Ni), a silane compound, and a nitrogen compound.

In such a case, the nitrogen compound may include at least one or more of common triazole compounds and amine compounds known in the art. The applicable triazole compound may be selected from, for example, benzotriazole, tolyltriazole, carboxybenzotriazole, chlorobenzotriazole, ethylbenzotriazole and naphthotriazole. In addition, available amine compounds may be selected from, for example, amide, acrylamide, acetamide, auramine, dodecyltrimethyl ammonium bromide (DTAB) and diethylenetriamine (DETA).

The anti-corrosion layer 20 may serve to impart not only the anti-corrosion properties to the metal foil 100 described above, but also heat-resistance properties and/or properties to increase a bonding strength with active materials.

The metal foil 100 according to an embodiment of the present invention may be prepared through a conventional electrolytic foil-forming apparatus, but embodiments are not particularly limited thereto. For example, a drum, which serves as a cathode, and an anode are installed in a container to which an electrolyte is continuously supplied, and a current is applied in a state that the drum and the anode are spaced apart from each other so that the electrolyte may be interposed therebetween. In such a case, as the drum rotates, an metal foil is electro-deposited on a surface of the drum, and then it is wound through a guide roll.

In such a case, a conventional electroplating electrolyte component known in the art may be used as the electrolyte without particular limitation, and may include, for example, copper sulfate, sulfuric acid and a trace amount of chlorine as main components and may include at least one conventional plating additive.

As the additive, additives commonly used in the electroplating field may be used without limitation, and examples thereof may include an accelerator, a brightener, a smoothing agent, a suppressor (e.g., inhibitor), or a mixture thereof.

The accelerator/brightener is added to give gloss to a plating surface and to obtain a fine plating layer, and may include, for example, organic substances including disulfide bond (-S-S-) and a mercapto group (-SH) or a sulfonate-based additive including sulfide. Specific examples thereof may include at least one of 3-mercaptopropyl sulfonate (MPS), bis-(3-sulfopropyl)-disulfide (SPS), 3-N,N-dimethlyamonodithiocarbamoy-1-propanesulfonic acid (DPS), and polymethyldithiocarbonic amine-sulfopropylsulfonate (PTA) .

The suppressor/carrier adsorbs on a surface to slow the electroplating by interfering with the access of copper ions, and is a component added to realize stable low roughness. For example, polymer-based organic compounds such as hydroxyethyl cellulose (HEC), polyethylene glycols (PEG), polypropylene glycols (PPG), polyvinyl alcohols, low molecular weight gelatin (molecular weight: about 1,000 to 100,000), cellulose-based additives, and collagen , or a mixture thereof may be used. In addition, an organic material including a polyether-based polymer material and a functional group including a nitrogen atom, a sulfosuccinate-based surfactant, and/or an ethandiamineoxirane-based surfactant may be used.

The leveler/flattener is a component added to obtain a flat (e.g., planar), low-roughness metal foil by removing surface steps. For example, low molecular weight nitrides (e.g., thiourea series, amides, benzimidazole series, benthiazol series, dimethyl aniline, etc.) may be used, and specifically, thiourea, JGB (Janus Green B), PEI, 3-(benzothiazolyl- 2-mercapto)-propyl-sulfonic acid may be used.

In an example, the electrolyte may include, for example, 50 to 150 g/l of copper ions, 50 to 150 g/l of sulfuric acid, and 1 to 100 ppm of halogens, and 3 to 1500 ppb of at least one additive which serves as a brightener may be further included, and at least one additive which serves as a carrier and a leveler may be further added in a controlled amount of 1 to 4000 ppb.

A specific composition of the additive added to the electrolyte may include 3 to 1500 ppb of the brightener, 3 to 4000 ppb of the low molecular weight gelatin, 3 to 3000 ppb of HEC, and 1 to 20 ppb of the leveler.

In addition, the electroplating conditions applied at the time of electrodeposition of the metal foil may be appropriately adjusted within a range known in the art. For example, a current density may be in a range from 30 ASD (A/dm$^2$) to 100 ASD, and specifically, in a range from 30 ASD to 80 ASD. In addition, a temperature of the electrolyte may be, for example, in a range from 35 to 75°C, and specifically in a range from 40 to 60°C. A flow rate of the electrolyte supplied may be, for example, in a range from 30 to 120 m$^3$/hr, and specifically in a range from 50 to 100 m$^3$/hr.

However, it is not specifically limited to the above range.

Factors such as a difference in surface roughness between the M surface (e.g., 10a) and the S surface (e.g., 10b) of the metal foil may be controlled by adjusting the composition of the electrolyte, the current density, the temperature, and the type and/or contents of the additives described above.

An metal foil electrodeposited as described above is peeled off from a surface of the drum, and then wound up through a guide roll to form a wide and long film-like metal foil roll. The manufacturing of the metal foil 100 according to the present invention is completed by locally heat-treating the edge portion 60 at opposite ends while the metal foil roll is transported through at least one arbitrary roller. Then, it may be wound into a roll shape again. In addition, the metal foil may be wound in a roll shape again and may be slit into a unit metal foil of a small width if necessary.

If necessary, metal electrolytic or electroless plating of Ni, Cr, Mo, Ag, or the like may be additionally performed to impart characteristics to the metal foil. In addition, an organic coating known in the art, such as silane, BTA, or a conductive polymer, may be additionally applied to the metal foil to enhance adhesion, prevent corrosion (e.g., rust), and reduce contact resistance. In addition, at least one or more conventional nodule treatment, heat resistance treatment, chemical resistance treatment, corrosion prevention treatment, and the like known in the art may be additionally performed.

<Electrode>

Another embodiment of the present invention is an electrode for secondary batteries including the above-described metal foil as a current collector.

In a lithium secondary battery, for example, a foil including aluminum (Al) is generally used as a cathode (e.g., positive electrode) current collector combined with a cathode active material, and a foil including copper (Cu) is generally used as an anode (e.g., negative electrode) current collector combined with an anode active material. Accordingly, in the present invention, a case in which the metal foil 100 is applied as an anode current collector will be described.

In an example, the anode includes the above-mentioned metal foil; and an anode active material layer disposed on the metal foil.

The anode active material layer includes an anode active material, and may further include a conventional binder and/or a conductive material known in the art.

The anode active material is not particularly limited as long as it is a compound capable of intercalation and deintercalation of ions. Non-limiting examples of applicable anode active materials may include, but may not be limited to, carbon-based and silicon-based anode active materials, and in addition, lithium metal or alloys thereof, and other metal oxides such as TiO2, SnO2 and Li4Ti5012 capable of occluding and releasing lithium and having an electric potential of less than 2 V with respect to lithium may be used.

Since a method of manufacturing an electrode for secondary batteries using the above-described metal foil is known to those skilled in the art to which the present invention pertains, a detailed description thereof will be omitted.

<Secondary battery>

A secondary battery according to another embodiment of the present invention includes an anode (e.g., negative electrode) including the above-described metal foil.

The secondary battery may be a lithium secondary battery, and specifically, may include a lithium metal secondary battery, a lithium ion secondary battery, a lithium polymer secondary battery, a lithium ion polymer secondary battery, or the like.

In an example, the lithium secondary battery may include a cathode (e.g., positive electrode) including a cathode active material; an anode (e.g., negative electrode) including an anode active material; and an electrolyte interposed between the cathode and the anode. In addition, a separator may further be included.

The lithium secondary battery according to an embodiment of the present invention may be manufactured according to conventional methods known in the art, for example, by interposing a separator between the cathode and the anode and then introducing the electrolyte to which the electrolyte additive is added.

The electrolyte may include conventional lithium salts known in the art; and an electrolyte solvent.

As the separator, a porous separator, for example, a polypropylene-based, polyethylene-based, or polyolefin-based porous separator may be used, or an organic/inorganic composite separator including an inorganic material may be used.

Hereinafter, the present invention will be described in detail through embodiments. However, the following embodiments are only to illustrate the present invention, and the present invention is not limited by the following embodiments.

[Reference Example]

In an example of the present invention, a copper foil A, a copper foil B, and a copper foil C manufactured through a conventional manufacturing process were each used. Their manufacturing process is as follows.

To prepare an electrolyte, a copper ion concentration was adjusted to 80 g/l, a sulfuric acid concentration was adjusted to 100 g/l, a chlorine concentration was adjusted to 30 ppm at a temperature of 60°C, and a low molecular weight gelatin (molecular weight 3,000), HEC (Hydroxyethyl Cellulose), MPS (3-mercaptopropyl sulfonate) as a brightener, and thiourea as a leveler were used as an additive introduced into the electrolyte.

The copper foil A was prepared using an electrolyte including 10 ppb of the brightener, 10 ppb of the low molecular weight gelatin, and 10 ppb of HEC. In such a case, a temperature of the electrolyte was 55°C, a flow rate of the electrolyte was at 80 m$^3$/hr, and a current density was 60 ASD (A/dm$^2$).

For the copper foil B, an electrolyte including 2000 ppb of the low molecular weight gelatin and 2,000 ppb of HEC was used, and the conditions of the electrolyte solution were the same as those of the copper foil A.

For the copper foil C, an electrolyte including 800 ppb of the brightener, 2000 ppb of the low molecular weight gelatin, 2000 ppb of HEC, and 10 ppb of the leveler was used, and the electrolyte conditions were the same as those of the copper foil A.

[Example 1]

The three types of the copper foils A, B, and C prepared above were each wound with edge heaters disposed at opposite ends along the longitudinal direction of the copper foil at a temperature adjusted to 250°C, while being processed at a slitting speed of 1 m/min. The number of tears in the copper foil was identified while slitting was performed for about 100 km. In such a case, an edge heating section was set to 1 m section, the heat treatment temperature was set to 250°C, and an inert gas was purged. That is, it was made the same as heat treatment of the edge portions of the copper foil at opposite ends in the longitudinal direction at 250°C for about 1 minute.

The physical properties of the three types of copper foil samples subjected to local heat treatment on edge portions at opposite ends were evaluated in the following manner, and the results are shown in Table 1 below.

<Physical property evaluation method>

(1) Thickness measurement

A thickness was measured by a unit basis weight method, which is a typical thickness measurement method of copper foil (IPC-TM-650 2.2.12).

(2) Elongation measurement

An elongation (%) was measured using UTM (Instron, model name: 5942) in accordance with IPC-TM-650 2.4.18 standard.

(3) Tensile strength measurement

A tensile strength (kpsi) was measured using UTM (Instron, model name: 5942) in accordance with IPC-TM-650 2.4.18 standard.

(4) First elongation increase rate and elongation change rate

A first elongation increase rate and an elongation change rate were calculated according to Equations 1 and 2, respectively.

[Equation 1]

First elongation increase rate (%) = E1/E2 × 100

[Equation 2]

Elongation change rate (RE, %) = (E1-E2/E2) × 100

[Table 1]

| Sample | Thick ness | Remaining area of metal foil | | Edge portions at opposite ends of metal foil (Heat treatment 250°C, 1 min) | | Number of tearing | First elongation increase rate | Elongation change rate |
|---|---|---|---|---|---|---|---|---|
| | | Tensile strength | Second Elongation (E2) | Tensile strength | First Elongation (E1) | | | |
| | (μm) | (kpsi) | (%) | (kpsi) | (% ) | (Number/100km) | (%) | (%) |
| Copper foil A | 6 | 80.5 | 2.5 | 38.9 | 11.0 | 0 | 440 | 340% |
| | 10 | 80.7 | 7.0 | 39.0 | 22.3 | 0 | 319 | 219% |
| | 14 | 80.2 | 8.2 | 38.8 | 29.7 | 0 | 362 | 262% |
| Copper foil B | 8 | 52.7 | 2.3 | 51.1 | 3.5 | 7 | 152 | 52% |
| | 10 | 53.5 | 6 | 50.3 | 8.2 | 1 | 137 | 37% |
| | 14 | 54.5 | 9.2 | 50.2 | 12.3 | 0 | 134 | 34% |
| | 20 | 52.8 | 11.0 | 50.1 | 13.5 | 0 | 123 | 23% |
| | 30 | 54.3 | 16.0 | 49.8 | 18.5 | 0 | 116 | 16% |
| | 50 | 53.7 | 18.5 | 50.0 | 20.7 | 0 | 112 | 12% |

(continued)

| Sample | Thick ness | Remaining area of metal foil | | Edge portions at opposite ends of metal foil (Heat treatment 250°C, 1 min) | | Number of tearing | First elongation increase rate | Elongation change rate |
|---|---|---|---|---|---|---|---|---|
| | | Tensile strength | Second Elongation (E2) | Tensile strength | First Elongation (E1) | | | |
| | (μm) | (kpsi) | (%) | (kpsi) | (% ) | (Number/100km) | (%) | (%) |
| Copper foil C | 6 | 51.3 | 3.2 | 44.5 | 5.5 | 0 | 172 | 72% |
| | 8 | 50.7 | 6.2 | 44.5 | 10.8 | 0 | 174 | 74% |
| | 10 | 51.2 | 8.5 | 45.2 | 12.5 | 0 | 147 | 47% |
| | 14 | 49.3 | 11.0 | 44.7 | 15.2 | 0 | 138 | 38% |

In such a case, since the copper foil B having a high tensile strength and a low elongation corresponds to a copper foil that is easy to tear, tearing occurred in the thin copper foil having a thickness of 10 μm or less. However, when edge heat treatment was not performed, the number of tears occurred much higher.

[Example 2]

The process was performed the same as in Example 1 except that the slitting speed was changed to 60 m/min instead of 1 m/min and the edge heat treatment temperature was changed to 350°C. In Example 2, it was made the same as that the edge portions of the copper foil at opposite ends in the longitudinal direction were heat treated at 350°C for about 1 second. Then, the physical properties of the three types of copper foil samples were evaluated in the same manner as in Example 1, and the results are shown in Table 2 below.

[Table 2]

| Sample | Thick ness | Remaining area of metal foil | | Edge portions at opposite ends of metal foil (Heat treatment 350°C, 1 sec) | | Number of tearing | First elongation increase rate | Elongation change rate |
|---|---|---|---|---|---|---|---|---|
| | | Tensile strength | Second elongation | Tensile strength | First elongation | | | |
| | (μm) | (kpsi) | (%) | (kpsi) | (%) | (Number/ 100km) | (%) | (%) |
| Copper foil A | 6 | 80.5 | 2.7 | 39.2 | 10.2 | 0 | 378 | 278% |
| | 10 | 80.6 | 7.1 | 38.7 | 19.8 | 0 | 279 | 179% |
| | 14 | 80.3 | 8.4 | 39.3 | 28.5 | 0 | 339 | 239% |
| Copper foil B | 8 | 52.9 | 2.2 | 50.1 | 3.3 | 6 | 150 | 50% |
| | 10 | 53.7 | 6.4 | 51.7 | 7.7 | 2 | 120 | 20% |
| | 14 | 54.7 | 9.3 | 51.3 | 10.8 | 0 | 116 | 16% |
| | 20 | 52.7 | 10.9 | 50.7 | 12.7 | 0 | 117 | 170 |
| | 30 | 54.1 | 15.8 | 50.1 | 17.8 | 0 | 113 | 13% |
| | 50 | 54.3 | 18.2 | 50.6 | 20.1 | 0 | 110 | 100 |

(continued)

| Sample | Thick ness | Remaining area of metal foil | | Edge portions at opposite ends of metal foil (Heat treatment 350°C, 1 sec) | | Number of tearing | First elongation increase rate | Elongation change rate |
|---|---|---|---|---|---|---|---|---|
| | | Tensile strength | Second elongation | Tensile strength | First elongation | | | |
| | (μm) | (kpsi) | (%) | (kpsi) | (%) | (Number/ 100km) | (%) | (%) |
| Copper foil C | 6 | 52.2 | 3.3 | 45.2 | 5.2 | 0 | 158 | 58% |
| | 8 | 51.5 | 6.1 | 44.7 | 9.4 | 0 | 154 | 54% |
| | 10 | 51.7 | 8.3 | 45.1 | 11.9 | 0 | 143 | 43% |
| | 14 | 49.7 | 10.8 | 41.3 | 14.5 | 0 | 134 | 34% |

[Comparative Example 1]

The process was performed the same as in Example 1 using the three copper foils A, B, and C prepared above, except that the edge heater was not used during slitting not to perform heat treatment.

Then, the physical properties of each copper foil sample were evaluated in the same manner as in Example 1, and the results are shown in Table 3 below.

[Table 3]

| Sample | Thick ness | Remaining area of metal foil | | Edge portions at opposite ends of metal foil | | Number of Tearing | First Elongation increase rate | Elongation Change rate |
|---|---|---|---|---|---|---|---|---|
| | | Tensile strength | Second Elongation | Tensile strength | First Elongation | | | |
| | (μm) | (kpsi) | (%) | (kpsi) | (%) | (Number/ 100km) | (%) | (%) |
| Copper foil A | 6 | 80.6 | 2.6 | 80.3 | 2.7 | 12 | 104 | 4% |
| | 10 | 80.7 | 7.1 | 80.8 | 7.0 | 9 | 98.6 | -1.4% |
| | 14 | 80.3 | 8.4 | 80.5 | 8.7 | 3 | 104 | 4% |
| Copper foil B | 8 | 53.1 | 2.2 | 53.7 | 2.1 | 27 | 95.4 | -4.5% |
| | 10 | 53.2 | 6.2 | 53.3 | 6.5 | 5 | 105 | 5% |
| | 14 | 53.9 | 8.9 | 54.1 | 9.1 | 1 | 102 | 2% |
| | 20 | 53.3 | 10.9 | 53.9 | 10.7 | 1 | 98 | -2 % |
| | 30 | 54.2 | 16.2 | 54.5 | 15.9 | 0 | 98 | -2 % |
| | 50 | 53.8 | 18.4 | 54.2 | 18.3 | 0 | 99 | -1% |
| Copper foil C | 6 | 52.1 | 3.1 | 52.3 | 3.3 | 8 | 106 | 6% |
| | 8 | 51.3 | 6.0 | 52.1 | 6.2 | 7 | 103 | 3% |
| | 10 | 51.8 | 8.6 | 52.0 | 8.5 | 2 | 98.8 | -1.2% |
| | 14 | 49.5 | 10.9 | 51.7 | 11.2 | 1 | 103 | 3% |

As shown in Table 3, in the case of Comparative Example 1, in which heat treatment was not performed, the elongation and tensile strength of the edge portion of the copper foil were the same, and in particular, it was found that breakage occurs more easily in the manufacturing process, as the thickness becomes thinner.

On the other hand, in Examples 1 and 2, it was found that the elongation of the edge portions at opposite ends of the metal foil was increased in a selective manner, and accordingly, not only thick copper foils but also thin copper foils having a thickness of 20 μm or less had significantly reduced breakage caused by the manufacturing process. Accordingly, it was appreciated that when the metal foil according to the present invention is used as a current collector for a battery, handling and quality reliability may be significantly increased in the process of manufacturing, processing, and using of a secondary battery.

**Claims**

1. A metal foil comprising one surface and another surface,

   wherein an edge portion at opposite ends of a surface parallel to a longitudinal direction of the metal foil has a first elongation E1,
   a remaining area of the metal foil except the edge portion has a second elongation E2, and
   the first elongation is 110% or more compared to the second elongation.

2. The metal foil according to claim 1, wherein an elongation change rate (RE) according to Equation 2 below is 10% or more.

$$[\text{Equation 2}]$$

$$RE = (E1-E2/E2) \times 100$$

3. The metal foil according to claim 1, wherein the first elongation is in a range from 3 to 30%, and the second elongation is in a range from 2 to 20%.

4. The metal foil according to claim 1, wherein a breaking strength of the edge portion at opposite ends is in a range from 35 to 55 kpsi, and
   a breaking strength of the remaining area of the metal foil except the edge portion is in a range from 50 to 85 kpsi.

5. The metal foil according to claim 1, wherein the edge portion ranges from one end in the longitudinal direction of the metal foil to 15 mm.

6. The metal foil according to claim 1, wherein the metal foil is a wound metal foil roll.

7. The metal foil according to claim 1, wherein the edge portion at opposite ends of the metal foil is locally heat treated while the metal foil is transferred from a first roller to a second roller.

8. The metal foil according to claim 1, wherein the heat treatment is carried out at a temperature of 150°C or higher for 0.1 to 60 seconds under inert conditions.

9. The metal foil according to claim 1, wherein the metal foil is one or more metals selected from Cu, Al, Ni, Fe, Ag and Au or alloys thereof.

10. The metal foil according to claim 1, wherein a thickness of the metal foil is in a range from 3 to 20 μm.

11. The metal foil according to claim 1, wherein a roughness (Rz) of each of opposite surfaces of the metal foil is in a range from 0.5 to 5.0 μm, and
    a surface roughness difference between the one surface and the another surface is in a range from 2.0 μm or less.

12. The metal foil according to claim 1, further comprising at least one layer of an anti-corrosion layer formed on a surface of the metal foil, and
    the anti-corrosion layer includes at least one of chromium (Cr), molybdenum (Mo), nickel (Ni), a silane compound and a nitrogen compound.

13. The metal foil according to claim 1, wherein the metal foil is an electrolytic metal foil.

14. The metal foil according to claim 1, applied as an anode current collector of a lithium secondary battery.

15. An electrode for a secondary battery, comprising:

the metal foil according to any one of claims 1 to 14; and
an active material layer disposed on the metal foil.

16. A secondary battery comprising the electrode according to claim 15.

FIG. 1

<u>100</u>

10a

60    50    10b    60

FIG. 2

<u>200</u>

20

60    50    20    60

FIG. 3

FIG. 4

## INTERNATIONAL SEARCH REPORT

| International application No |
| --- |
| **PCT/IB2022/062616** |

**A. CLASSIFICATION OF SUBJECT MATTER**
INV. H01M4/66    C22F1/08    H01M10/0525
ADD. H01M4/02

According to International Patent Classification (IPC) or to both national classification and IPC

**B. FIELDS SEARCHED**

Minimum documentation searched  (classification system followed by classification symbols)
H01M  C22F

Documentation searched other than minimum documentation to the extent that such documents are included  in the fields searched

Electronic data base consulted during the  international search (name of data base and,  where practicable, search terms used)

EPO-Internal, WPI Data

**C. DOCUMENTS CONSIDERED TO BE RELEVANT**

| Category* | Citation of document, with indication,  where appropriate, of the relevant passages | Relevant to claim No. |
| --- | --- | --- |
| X | CN 211 999 946 U (GUANGDONG FINE YUAN SCIENCE TECH CO LTD) 24 November 2020 (2020-11-24) paragraphs [0001] – [0003], [0005], [0054], [0055] ----- | 1-16 |
| A | DAI C.Y. ET AL: "Size effects on tensile and fatigue behaviour of polycrystalline metal foils at the micrometer scale", PHILOSOPHICAL MAGAZINE, vol. 91, no. 6, 15 January 2011 (2011-01-15), pages 932–945, XP093062977, GB ISSN: 1478-6435, DOI: 10.1080/14786435.2010.538017 abstract ----- | 1-16 |

-/--

| | |
| --- | --- |
| [x] Further documents are listed in the  continuation of Box C. | [x] See patent family annex. |

\* Special categories of cited documents :

"A" document defining the general state of the art which is not considered to be of particular relevance
"E" earlier application or patent but published on or after the international filing date
"L" document which may throw doubts on priority  claim(s) or which is cited to establish the publication date of another  citation or other special reason (as specified)
"O" document referring to an oral disclosure, use,  exhibition or other means
"P" document published prior to the international filing date but later than the priority date claimed

"T" later document published after the international filing date or priority date and not in conflict with the application but cited to understand the principle or theory underlying the invention
"X" document of particular relevance;; the claimed invention cannot be considered novel or cannot be considered to involve an inventive step when the document is taken alone
"Y" document of particular relevance;; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 11 July 2023 | 21/07/2023 |

| Name and mailing address of the ISA/ | Authorized officer |
| --- | --- |
| European Patent Office, P.B. 5818 Patentlaan 2 NL - 2280 HV Rijswijk Tel. (+31-70) 340-2040, Fax: (+31-70) 340-3016 | Grave, Christian |

Form PCT/ISA/210 (second sheet) (April 2005)

## INTERNATIONAL SEARCH REPORT

| International application No |
|---|
| **PCT/IB2022/062616** |

| C(Continuation). | DOCUMENTS CONSIDERED TO BE RELEVANT | |
|---|---|---|
| Category* | Citation of document, with indication, where appropriate, of the relevant passages | Relevant to claim No. |
| X | KR 102 456 668 B1 (CIRCUIT FOIL LUXEMBOURG SARL [LU]) 20 October 2022 (2022-10-20) the whole document -& EP 4 163 421 A1 (CIRCUIT FOIL LUXEMBOURG [LU]) 12 April 2023 (2023-04-12) paragraphs [0001], [0005], [0028], [0039] - [0045], [0050], [0051], [0055], [0068] - [0070] ----- | 1-16 |
| A | US 4 405 386 A (MRAVIC BRIAN [US] ET AL) 20 September 1983 (1983-09-20) column 1, line 59 - column 2, line 4 column 2, line 19 - line 31 column 3, line 29 - line 32 ----- | 1-16 |

Form PCT/ISA/210 (continuation of second sheet) (April 2005)

## INTERNATIONAL SEARCH REPORT
Information on patent family members

International application No

**PCT/IB2022/062616**

| Patent document cited in search report | | Publication date | Patent family member(s) | | Publication date |
|---|---|---|---|---|---|
| CN 211999946 | U | 24-11-2020 | NONE | | |
| KR 102456668 | B1 | 20-10-2022 | CA | 3172526 A1 | 07-04-2023 |
| | | | EP | 4163421 A1 | 12-04-2023 |
| | | | KR | 102456668 B1 | 20-10-2022 |
| | | | US | 2023111549 A1 | 13-04-2023 |
| | | | WO | 2023057068 A1 | 13-04-2023 |
| EP 4163421 | A1 | 12-04-2023 | CA | 3172526 A1 | 07-04-2023 |
| | | | EP | 4163421 A1 | 12-04-2023 |
| | | | KR | 102456668 B1 | 20-10-2022 |
| | | | US | 2023111549 A1 | 13-04-2023 |
| | | | WO | 2023057068 A1 | 13-04-2023 |
| US 4405386 | A | 20-09-1983 | NONE | | |

Form PCT/ISA/210 (patent family annex) (April 2005)